# EUROPÄISCHE PATENTSCHRIFT

(11) **EP 3 835 613 B1**
(45) Veröffentlichungstag und Bekanntmachung des Hinweises auf die Patenterteilung: **12.10.2022**
(21) Anmeldenummer: 20203705.7
(22) Anmeldetag: 23.10.2020
(51) Int. Cl.: F16F 9/04

(54) **GUMMIFEDER MIT EINEM INTEGRIERTEN TRAGLASTSENSOR IN EINEM FEDERSYSTEM EINES FAHRZEUGS**
RUBBER SPRING WITH AN INTEGRATED LOAD SENSOR IN A SPRING SYSTEM OF A VEHICLE
RESSORT EN CAOUTCHOUC DOTÉ D'UN CAPTEUR DE CHARGE UTILE INTÉGRÉ DANS UN SYSTÈME DE SUSPENSION DE VÉHICULE

(30) Priorität: 04.12.2019 DE 102019218852
(43) Veröffentlichungstag der Anmeldung: 16.06.2021
(73) Patentinhaber: ContiTech Luftfedersysteme GmbH, 30165 Hannover (DE)
(72) Erfinder: Kranz, Harald - c/o Continental AG, 30419 Hannover (DE)
(74) Vertreter: Continental Corporation

(56) Entgegenhaltungen:
- EP-A1- 3 505 418
- DE-A1-102015 223 799
- DE-A1-102016 222 663

## Beschreibung

Die Erfindung betrifft eine Gummifeder mit einem integrierten Traglastsensor, welche als eine Zusatzfeder an einem Federsystem eines Fahrzeugs ausgebildet und angeordnet ist.

Derartige Gummifedern kommen beispielsweise als Zusatzfedern an Luftfedern von Schienenfahrzeugen zum Einsatz, wobei die Luftfedern ein Bestandteil eines meistens aus Stahlfedern und Luftfedern bestehenden Federsystems des Schienenfahrzeugs sind. Dabei ist die Stahlfederung als sogenannte Primärfederung zwischen den Radachsen und dem Fahrwerk angeordnet. Die Luftfedern sind als sogenannte Sekundärfedern zwischen dem Fahrwerk und der Karosserie angeordnet und dienen zu einer möglichst weichen Federung der Karosserie. Die Sekundärfedern bestehen jeweils aus einer Luftfeder mit einem Luftfederbalg und einer Gummifeder, die miteinander gekoppelt sind, wobei die Luftfeder als Hauptfeder und die Gummifeder als Zusatzfeder bezeichnet wird.

Bei einer derartigen Anordnung ist der Luftfederbalg karosserieseitig üblicherweise mittels einer Befestigungsplatte an der Karosserie und fahrwerkseitig mittels einer Felge an einem der Karosserie zugewandten oberen Abschnitt der Gummifeder befestigt. Die Felge ist dabei ein Bestandteil der als Gummimetallfeder ausgebildeten Gummifeder, wobei die Felge an dem Gummikörper der Gummifeder anvulkanisiert ist.

Die Gummifeder ist an einem von der Felge abgewandten unteren Abschnitt über einen sogenannten Innenkegel mittels eines Anschlussteils an dem Fahrwerk befestigt. Der Innenkegel ist ebenfalls ein Bestandteil der als Gummimetallfeder ausgebildeten Gummifeder, wobei der Innenkegel an dem Gummikörper der Gummifeder anvulkanisiert ist.

Der Luftfederbalg ist demnach mittels der Felge mit der Gummifeder in Reihe gekoppelt. Durch den Luftfederbalg, die oben angeordnete Befestigungsplatte, die Felge und dem Innenkegel der Gummifeder ist eine geschlossene Luftfederkammer gebildet, in der vorzugsweise Luft als Arbeitsmedium eingebracht ist, so dass eine Relativbewegung zwischen der Gummifeder und der Befestigungsplatte zu einem Komprimieren der Luft in dieser Luftfederkammer führt, wodurch eine Luftfederwirkung gewährleistet ist. Bei einem Defekt der Luftfeder stützt sich die Karosserie über die oben angeordnete Befestigungsplatte mittels der Gummifeder am Fahrwerk ab, wobei die Gummifeder als vergleichsweise steife Notfederung wirkt.

Für eine Niveauregulierung und/oder einen hohen Federungskomfort kann der Einfederungsweg der Luftfeder im Betrieb ermittelt werden. Aus dem Wert dieses Einfederungswegs können auch die tatsächlich auftretenden Belastungen der Luftfeder berechnet werden. Dafür werden bisher Sensorsysteme verwendet, welche beispielsweise mit Kraftsensoren oder Ultraschallsensoren arbeiten. Diese Sensoren sind in der Regel separat über oder unter der Luftfeder angeordnet. Mittels derartiger Sensoren wird die Vertikalbewegung des Luftfederbalgs zumindest indirekt ermittelt. Anhand der gemessenen Einfederung des Luftfederbalgs kann sodann auf den tatsächlich zurückgelegten Einfederungsweg des Luftfederbalgs und auf die diese Einfederung verursachende Belastung geschlossen werden. Nachteilig daran ist, dass die separaten Sensoren zusätzlichen Bauraum beanspruchen und verschleißanfällig sind.

Allerdings wird die Einfederung der Gummifeder selbst hierbei nicht ermittelt und bleibt deshalb außer Betracht. Da der Luftfederbalg und die Gummifeder jedoch hinsichtlich der Federung in Reihe gekoppelt sind, also zusammenwirken, wurde ein Verbesserungsbedarf festgestellt. Denn auch die Einfederung der Gummifeder hat Einfluss auf die Niveauregulierung. Außerdem ist die Belastung der Gummifeder insbesondere bei einem Defekt der Luftfeder von großem Interesse.

Aus der DE 10 2016 222 663 A1 ist eine Schienenfahrzeugfederung bekannt, die zwischen einer Karosserie und einem Fahrwerk des Schienenfahrzeugs angeordnet ist. Diese Schienenfahrzeugfederung weist eine Befestigungsplatte, einen Luftfederbalg, eine Gummifeder, eine am oberen Teil der Gummifeder angeordnete Felge und ein am unteren Teil der Gummifeder vorhandenes Anschlussteil auf. Mittels der Befestigungsplatte ist der Luftfederbalg an der Karosserie des Schienenfahrzeugs befestigbar. Mittels des Anschlussteils ist die Gummifeder über deren Innenkegel direkt oder zumindest indirekt an dem Fahrwerk befestigbar. Außerdem ist der Luftfederbalg fahrwerksseitig über die Felge an der Gummifeder befestigt, so dass der Luftfederbalg und die Gummifeder in Reihe gekoppelt sind. Darüber hinaus weist die Schienenfahrzeugfederung einen mit der Gummifeder zumindest indirekt gekoppelten Feldsensor auf, der zur kapazitiven oder induktiven Messung eines Einfederungsweges der Gummifeder ausgebildet ist.

Der Feldsensor weist dazu ein erstes Sensorteil und ein zweites Sensorteil auf. Ein induktiver Feldsensor zur Erfassung eines Federwegs der Gummifeder weist dabei beispielsweise eine Spule auf, die koaxial um einen metallischen Innenkegel in die Gummifeder integriert ist, welcher einen Tauchanker für die Spule bildet. Ein kapazitiver Feldsensor zur Erfassung eines Federwegs der Gummifeder weist beispielsweise eine in die Gummifeder integrierte metallische Platte und einen metallischen Innenkegel auf, so dass die metallische Platte und der metallische Innenkegel einen Messkondensator des Feldsensors bilden. Die beiden Sensorteile sind derart angeordnet, dass dann, wenn eine Kraft auf die Gummifeder in Vertikalrichtung wirkt, die beiden Sensorteile eine Relativbewegung zueinander ausführen, welches zu einer vertikalen Komprimierung der Gummifeder führt, welche sodann mittels der Sensorteile kapazitiv und/oder induktiv messbar ist. Der Feldsensor ist zwar in die Gummifeder integriert und erfordert daher keinen zusätzlichen Bauraum. Nachteilig daran ist jedoch, dass der Feldsensor zwei relativ große zueinander bewegliche metallische Bauteile erfordert. Dadurch können sich die Elastizitätseigenschaften der Gummifeder ungünstig verändern. Außerdem erhöht sich durch den Feldsensor das Gewicht der Gummifeder merklich.

Vor diesem Hintergrund lag der Erfindung die Aufgabe zugrunde, eine verbesserte Gummifeder mit einem integriertem Traglastsensor der eingangs genannten Art vorzustellen, welche eine Messung der mechanischen Belastung der Gummifeder ermöglicht, ohne dafür bauliche Veränderungen vorzunehmen und ohne das Einbauvolumen der Gummifeder zu ändern. Außerdem soll der Traglastsensor ein vergleichsweise geringes Gewicht haben und die Gummifeder zudem kostengünstig in der Herstellung sein. Vor allem soll der Traglastsensor die Federeigenschaften des Federsystems nicht negativ beeinflussen. Insbesondere soll eine mit einem solchen Traglastsensor ausgestattete Gummifeder für den Einsatz als eine Zusatzfeder und/oder als eine Notfeder an einer Luftfeder in einem Federsystem eines Fahrzeugs geeignet sein.

Die Lösung dieser Aufgabe wurde mit einer Gummifeder erreicht, welche die Merkmale des Anspruchs 1 aufweist. Vorteilhafte Weiterbildungen dieser Gummifeder sind in den dazu abhängigen Ansprüchen definiert.

Die Erfindung betrifft demnach eine Gummifeder mit einem integrierten Traglastsensor, welche als eine Zusatzfeder an einem Federsystem eines Fahrzeugs ausgebildet und angeordnet ist. Zur Lösung der gestellten Aufgabe sieht die Erfindung vor, dass der Traglastsensor als ein folienartiger Dielektrischer-Elastomer-Sensor ausgebildet ist.

Überaschenderweise hat sich herausgestellt, dass ein Dielektrischer Elastomer-Sensor vorteilhaft als ein Traglastsensor in einem Federsystem eines Fahrzeugs genutzt werden kann. Ein solcher Traglastsensor ist extrem dehnbar und daher besonders vorteilhaft zur Integration in eine flexible, dehnbare Struktur geeignet, wie dies eine Gummifeder ist. Dieser Traglastsensor ist in seiner Größe sowie Form sehr variabel herstellbar und kann somit leicht an den Gummikörper der Gummifeder angepasst und in diesen integriert werden. Das Federsystem wird durch den Einbau des Sensors nicht vergrößert. Weitere Vorteile eines solchen Sensors sind sein sehr geringes Gewicht, sein sehr geringer Platzbedarf, sein empfindliches Ansprechverhalten sowie seine geringen Kosten.

Ein Dielektrischer Elastomer-Sensor besteht aus einem, weniger als 1 Millimeter dicken, elastischen und inkompressiblen Dielektrikum, beispielsweise einem Elastomerfilm beziehungsweise einer Elastomerfolie aus Silikon, Acryl oder Polyurethan, dessen Oberflächen beidseitig mit dehnbaren Elektroden, beispielsweise aus Graphitpulver, Rußpulver oder Goldpulver, stoffschlüssig beschichtet sind. Mehrere derartig gebildeter Schichten können einen Stapel bilden.

Der prinzipielle Aufbau eines Dielektrischen Elastomer-Sensors entspricht dem eines sehr dünnen elektrostatischen Plattenkondensators, der jedoch nachgiebig, insbesondere extrem dehnbar, ist. Legt man an die Elektroden des Kondensators eine elektrische Spannung im Kilovoltbereich an, erfährt das Dielektrikum bei gegensätzlicher Aufladung der Elektroden die Coulomb-Kraft, wodurch sich die gegenüberliegenden Elektroden gegenseitig anziehen. Das Dielektrikum wird folglich durch die Coulomb-Kraft in Dickenrichtung zusammengedrückt. Aufgrund der Inkompressibilität des Dielektrikums dehnt sich der Kondensator infolgedessen lateral aus. Die Flächenvergrößerung der Elektroden wird zusätzlich durch die elektrostatische Abstoßung der gleichnamigen Ladungen innerhalb der Elektroden verstärkt. Die beschriebene Verformung ist reversibel. Beim Kurzschließen des Schaltkreises entlädt sich der der Kondensator und kehrt selbständig in seinen elektrischen sowie geometrischen Ursprungszustand zurück.

Die Erfindung macht sich zunutze, dass der Kondensator nicht nur, wie zuvor beschrieben, als ein Dielektrischer-Elastomer-Aktor eingesetzt werden kann, um als Stellglied eine Kraft auszuüben oder eine Bewegung zu erzeugen, sondern in umgekehrter Funktion als ein Dielektrischer Elastomer-Sensor verwendet werden kann, um eine Kraft zu detektieren. Dielektrische-Elastomer-Sensoren wurden bereits näher untersucht und werden derzeit weiterentwickelt (siehe: "Sensorik mit haptischer Rückmeldung - smart und fühlbar", Symposium Elektronik und Systemintegration, 11.4.2018, Landshut, Dr. Bernhard Brunner, Fraunhofer Institut für Silicatforschung (ISC), Würzburg).

Demnach wird bei einer Einfederung der erfindungsgemäßen Gummifeder die Fläche des in deren Gummikörper integrierten Dielektrischen-Elastomer-Sensors mit einem mechanischen Druck beaufschlagt, der zu einer Verformung des Sensors führt. Durch die Verformung des Sensors verringert sich dessen Dicke bei gleichzeitiger Vergrößerung seiner Fläche. Daraus resultiert eine elektrische Kapazitätsänderung des Kondensators, insbesondere eine Erhöhung der Kapazität, welche als Messgröße erfasst werden kann. Das Messsignal des Dielektrischen-Elastomer-Sensors kann mittels einer mit dem Sensor elektrisch verbundenen Auswertelektronik verarbeitet und zur Bestimmung einer auf die Gummifeder und damit auf das ganze Federsystem wirkenden Kraft ausgewertet werden.

Gemäß einer Weiterbildung der die Merkmale der Erfindung aufweisenden Gummifeder ist vorgesehen, dass die Gummifeder als Gummimetallfeder ausgebildet sowie als Zusatzfeder an einer Luftfeder eines Federsystems eines Schienenfahrzeugs angeordnet ist, dass die Gummifeder einen rotationssymmetrischen Gummikörper aufweist, die Gummifeder radial außen eine mit einem Luftfederbalg der Luftfeder verbindbare ringförmige metallische Felge sowie radial innen einen metallischen Innenkegel aufweist, und dass der Traglastsensor radial zwischen der Felge und die Innenkegel angeordnet sowie von dem Gummikörper der Gummifeder zumindest teilweise überdeckt ist.

Eine solche Schienenfahrzeugfederung, die zwischen einer Karosserie und einem Fahrwerk eines Schienenfahrzeugs angeordnet ist, und bei welcher der Luftfederbalg sowie die Gummifeder hinsichtlich der Federung in Reihe gekoppelt sind, wird im Fahrbetrieb des Fahrzeugs mit einer überwiegend in Vertikalrichtung wirkenden Kraft beaufschlagt, welche aufgrund der Reihenschaltung des Luftfederbalgs und der Gummifeder auch auf die Gummifeder wirkt, wodurch sich die Gummifeder verformt und in Vertikalrichtung der Schienenfahrzeugfederung einfedert. Die Gummifeder wird demnach entlang ihrer Längsachse gestaucht, welches mittels des in ihr angeordneten Traglastsensors messbar ist.

Der in den Gummikörper der Gummifeder integrierte folienartige Dielektrische-Elastomer-Sensor wird durch die Einfederung der Gummifeder entsprechend der beaufschlagenden Kraft belastet, wodurch sich die Foliendicke des Sensors verringert und die Elektrodenfläche vergrößert. Dies resultiert in einer Kapazitätserhöhung des Sensors, welche mittels einer zugeordneten Mess- und Auswerteeinrichtung gemessen werden kann. Aus der Kapazitätserhöhung kann der Betrag der Kraft ermittelt werden, mit welcher die Gummifeder beaufschlagt wurde. Daraus kann, nach einer vorhergehenden Kalibrierung, auf den Betrag der auf die gesamte Schienenfahrzeugfederung einwirkenden Kraft geschlossen werden. Die auf die Schienenfahrzeugfederung einwirkende Kraft kann, basierend auf der Kapazitätsmessung des Dielektrischen-Elastomer-Sensors, sowohl während des Fahrbetriebs als auch während einer stationären Belastung der Schienenfahrzeugfederung ermittelt werden.

Der Luftfederbalg mittels einer Veränderung des Druckes in der Luftfederkammer sowie mit Hilfe eines Wegsensors zur Niveauregulierung des Fahrzeugniveaus, also des vertikalen Abstands zwischen Karosserie und Radachse, verwendet werden. Daraus resultiert, dass die Befestigungsplatte des Luftfederbalgs an der Karosserie während des Betriebs nicht immer den gleichen vertikalen Abstand zu der Felge der Gummifeder, an welcher der Luftfederbalg befestigt ist, aufweisen muss. Eine vertikale Bewegung des Luftfederbalgs kann deshalb jedenfalls nicht ohne weiteres unmittelbar Aufschluss über die auf die Schienenfahrzeugfederung einwirkende Kraft geben. Die von dem Dielektrischen-Elastomer-Sensor erfasste vertikale Belastung der Gummifeder ist hierzu jedoch geeignet.

Für den Fall, dass der Luftfederbalg defekt ist und die Luftfederung daher ausfällt, wirkt die Gummifeder als Notfeder, auf deren Oberseite die Karosserie zumindest indirekt aufliegen kann. Mit Hilfe des Dielektrische-Elastomer-Sensors kann auch in diesem Fall, also ohne die Luftfederung, die vertikale mechanische Belastung auf die Schienenfahrzeugfederung ermittelt werden.

Gemäß einer ersten Ausführungsform der Gummifeder ist vorgesehen, dass in dem Gummikörper der Gummifeder mindestens ein dort eingebettetes Zwischenblech angeordnet ist, und dass der Traglastsensor an dem mindestens einen Zwischenblech angeordnet ist.

Demnach kann ein Zwischenblech bei einer Metall-Gummiverbindung als ein Träger eines Dielektrischen-Elastomer-Sensors verwendet werden. Das Zwischenblech kann mit einer Elektrode des Sensors elektrisch leitend verbunden sein. Dadurch wird das Zwischenblech zu einem funktionalen Bestandteil des Sensors. Mit diesem Sensor kann eine dort wirkende Kraft bei einer Einfederung der Gummifeder direkt gemessen werden. Zusatzfedern an Luftfedern in Schienenfahrzeugfederungen werden häufig als konisch geformte Gummimetallfedern ausgebildet. Bei einer solchen Feder kann ein Dielektrischer-Elastomer-Sensor besonders einfach an einem solchen Zwischenblech angeordnet werden.

Gemäß einer dazu alternativen zweiten Ausführungsform ist vorgesehen, dass die Gummifeder mehrere Zwischenbleche aufweist, und dass an mehreren Zwischenblechen jeweils ein Traglastsensor angeordnet ist. Die an den jeweiligen Traglastsensoren anliegenden elektrischen Kapazitäten können zur Bildung eines einzigen Traglastsensorsignals elektrisch zusammengeschaltet sein.

Demnach kann bei einer Gummifeder mit mehreren, radial beabstandet in dessen Gummikörper integrierten Zwischenblechen an mehreren oder an allen dieser Zwischenbleche jeweils ein einzelner Dielektrischer-Elastomer-Sensor angeordnet sein. Diese Traglastsensoren können zu einem gemeinsamen Dielektrischen-Elastomer-Sensor derart miteinander verknüpft beziehungsweise elektrisch zusammengeschaltet sein, dass nur ein einziges kapazitives Messsignal erzeugt wird. Die an den jeweiligen Traglastsensoren anliegende elektrische Kapazität kann aber auch im Sinne einer redundanten Sensoreinrichtung genutzt werden, wobei bei einem Ausfall eines Einzelsensors zuverlässig eine Traglastinformation von dem wenigstens zweiten Traglastsensor zur Verfügung steht. Außerdem können die Messsignale der Einzelsensoren durch eine elektronische Schaltung oder rechnerisch gemittelt werden, so dass die Genauigkeit der Traglastmessung erhöht wird.

Weiter kann bei den beiden zuletzt genannten Ausführungsformen mit Vorteil vorgesehen sein, dass das mindestens eine Zwischenblech und/oder der mindestens eine Traglastsensor jeweils eine kegelmantelförmige Geometrie aufweisen. Hierdurch sind das mindestens eine Zwischenblech und der mindestens eine Traglastsensor optimal an die kegelförmige Geometrie der Gummifeder angepasst. Außerdem weist der jeweilige Traglastsensor dann eine besonders große Sensorfläche und dadurch eine vergleichsweise große elektrische Kapazität auf.

Gemäß einer dritten alternativen Ausführungsform der Erfindung ist vorgesehen, dass der Traglastsensor an der zum Gummikörper weisenden radialen Innenseite der ringförmigen metallischen Felge angeordnet ist. Hierdurch dient die metallische Felge zusätzlich als Tragkörper für den Traglastsensor, und außerdem kann die Felge als elektrischer Leiter für die eine Elektrode des Traglastsensors genutzt werden. Die hierbei dann nur einseitige Überdeckung des Traglastsensors mit dem elastischen Material des Gummikörpers der Gummifeder reicht aus, um eine Verformung des Traglastsensors bei einer mechanischen Belastung der Gummifeder zu erzielen.

Eine vierte alternative Ausführungsformem der Erfindung sieht abweichend dazu vor, dass der Traglastsensor an der radialen Außenseite des metallischen Innenkegels der Gummifeder angeordnet ist. Hierdurch dient der metallische Innenkegel zusätzlich als Tragkörper für den Traglastsensor. Außerdem kann der Innenkegel als elektrischer Leiter für den einen elektrischen Pol des Traglastsensors genutzt werden. Die hierbei dann nur einseitige Überdeckung des Traglastsensors mit dem elastischen Material des Gummikörpers der Gummifeder reicht ebenfalls aus, um eine Verformung des Traglastsensors bei einer mechanischen Belastung der Gummifeder zu erzielen.

Die Erfindung betrifft auch ein Federsystem, mit mindestens einer Gummifeder mit einem integrierten Traglastsensor zur Messung einer auf die Gummifeder wirkenden Traglast, welche gemäß zumindest einigen der oben genannten und in den Ansprüchen definierten Merkmalen ausgebildet ist.

Schließlich betrifft die Erfindung auch ein Fahrzeug, wie Schienenfahrzeug, mit einem Federsystem, mit mindestens einer Gummifeder mit einem integrierten Traglastsensor zur Messung einer auf die Gummifeder wirkenden Traglast, wobei die Gummifeder gemäß zumindest einigen der oben genannten und in den Ansprüchen definierten Merkmalen ausgebildet ist.

Die Erfindung wird nachstehend anhand von Ausführungsbeispielen weiter erläutert, die in der beigefügten Zeichnung dargestellt sind. In der Zeichnung zeigt
Fig. 1 eine schematische seitliche Teilansicht eines Schienenfahrzeugs mit einer Schienenfahrzeugfederung,
Fig. 2 eine schematische Querschnittdarstellung der Schienenfahrzeugfederung gemäß Fig. 1 mit einer Gummifeder mit einem integrierten Traglastsensor gemäß einer ersten Ausführungsform der Erfindung,
Fig. 3 eine vergrößerte Detailansicht der Gummifeder mit dem Traglastsensor gemäß Fig. 2,
Fig. 4 eine schematische Querschnittdarstellung der Gummifeder mit einem integrierten Traglastsensor gemäß einer dritten Ausführungsform der Erfindung,
Fig. 5 eine schematische Querschnittdarstellung der Gummifeder mit einem integrierten Traglastsensor gemäß einer vierten Ausführungsform der Erfindung,
Fig. 6 eine Prinzipdarstellung eines Traglastsensors gemäß den Figuren 2 bis 5 im unbelasteten Zustand, und
Fig. 7 den Traglastsensor gemäß Fig. 6 im belasteten Zustand.

Einige Bauelemente in den Figuren sind ähnlich oder stimmen überein, so dass sie mit denselben Bezugsziffern bezeichnet sind.

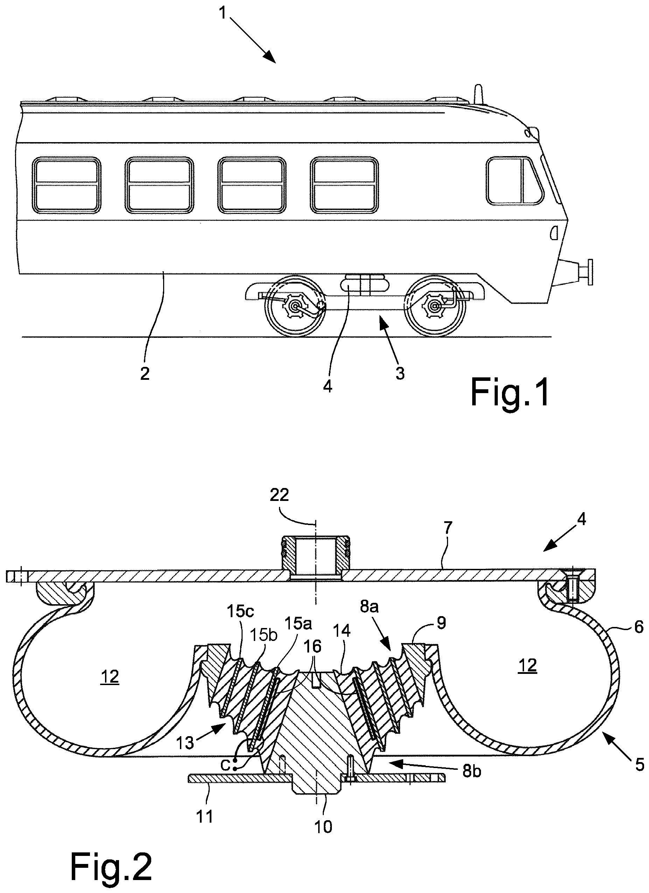

Demnach weist das in der Fig. 1 dargestellte Schienenfahrzeug 1 eine Karosserie 2 und ein Fahrwerk 3 auf. Zwischen der Karosserie 2 und dem Fahrwerk 3 ist eine Schienenfahrzeugfederung 4 angeordnet, mittels der die Karosserie 2 mit dem Fahrwerk 3 federnd verbunden ist.

Die in der Fig. 2 näher dargestellte Schienenfahrzeugfederung 4 weist eine Luftfeder 5 mit einem Luftfederbalg 6 und eine Gummifeder 13 mit mehreren Zwischenblechen 15a, 15b, 15c auf. Die Zwischenbleche 15a, 15b, 15c sind in den Gummikörper 14 der Gummifeder 13 integriert beziehungsweise einvulkanisiert und dienen zur Stabilisierung der Gummifeder 13. Die Gummifeder 13 ist also genauer gesagt als eine Gummimetallfeder ausgebildet.

Die Schienenfahrzeugfederung 4 weist außerdem eine Befestigungsplatte 7 auf, mittels der die Schienenfahrzeugfederung 4 an der Karosserie 2 des Schienenfahrzeugs 1 befestigbar ist, wobei der Luftfederbalg 6 karosserieseitig mit der Befestigungsplatte 7 druckdicht verbunden ist. An einem in Richtung zur Karosserie 2 hin gesehenen oberen Teil 8a der Gummifeder 13 ist eine ringförmige metallische Felge 9 angeordnet, welche mit dem Gummikörper 14 der Gummifeder 13 durch Vulkanisation fest verbunden ist. Mittels der Felge 9 ist die Gummifeder 13 mit dem Luftfederbalg 6 druckdicht verbunden. Somit sind der Luftfederbalg 6 und die Gummifeder 13 in Reihe miteinander gekoppelt. Die Gummifeder 13 ist außerdem an einem in Richtung zum Fahrwerk 3 hin gesehenen unteren Teil 8b der Gummifeder 13 mit einem metallischen Innenkegel 10 durch Vulkanisation verbunden sowie über diesen Innenkegel 10 an einer Anschlussplatte 11 befestigt. Die Anschlussplatte 11 ist mit dem Fahrwerk 3 direkt oder indirekt verbindbar. Somit ist die Gummifeder 13 über den Innenkegel 10 und weiter mittels der Anschlussplatte 11 an dem Fahrwerk 3 des Schienenfahrzeugs 1 befestigt.

Zwischen der Befestigungsplatte 7, dem Luftfederbalg 6 sowie der Gummifeder 13 samt deren Felge 9 und Innenkegel 10 ist eine druckdichte Luftfederkammer 12 ausgebildet. Die Luftfederkammer 12 dient dazu, um Kräften, die zwischen der Felge 9 und der Befestigungsplatte 7 wirken, durch Komprimieren und Dekomprimieren eines von der Luftfederkammer 12 eingeschlossenen Volumens an Luft oder einem anderen Arbeitsgas federnd entgegenzuwirken.

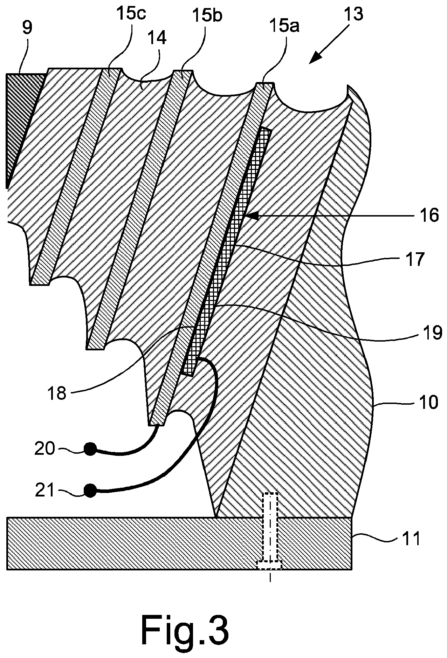

Außerdem weist die Schienenfahrzeugfederung 4 einen nachfolgend näher beschriebenen Traglastsensor 16 auf. Der Traglastsensor 16 ist in den Gummikörper 14 der Gummifeder 13 durch Vulkanisation integriert. Genauer gesagt ist der Traglastsensor 16 bei dem Ausführungsbeispiel gemäß den Figuren 2 und 3 unmittelbar an einem der hier beispielhaft dargestellten drei Zwischenbleche 15a, 15b, 15c angeordnet. Die Schnittbilddarstellung der Zwischenbleche 15a, 15b, 15c veranschaulicht, dass diese jeweils die Geometrie einer Kegelmantelfläche aufweisen. Auch der in Fig. 2 dargestellte einzige Traglastsensor 16 hat erkennbar eine solche Geometrie.

Fig. 3 zeigt einen vergrößerten Ausschnitt der gemäß Fig. 2 linken Seite der Gummifeder 13 mit dem Traglastsensor 16. Der Traglastsensor 16 ist als ein Dielektrischer-Elastomer-Sensor ausgebildet und mit seiner radialen Außenseite beziehungsweise mit seiner ersten Elektrode 18 elektrisch leitend auf der radialen Innenseite des ersten, radial inneren Zwischenblechs 15a befestigt. Der Traglastsensor 16 ist demnach in die Gummifeder 13 integriert und ebenso wie die drei Zwischenbleche 15a, 15b, 15c in einem Vulkanisierungsvorgang bei der Herstellung der Gummifeder 13 mit dem Material des elastischen Gummikörpers 14 der Gummifeder 13 verbunden worden.

Die erste Elektrode 18 des Traglastsensors 16 ist zunächst über das erste Zwischenblech 15a und dann über eine erste elektrische Leitung mit einem ersten elektrischen Anschluss 20 außerhalb der Gummifeder 13 verbunden. Zudem ist die radial innen an dem Traglastsensor 16 ausgebildete zweite Elektrode 19 des Traglastsensors 16 über eine zweite elektrische Leitung mit einem zweiten elektrischen Anschluss 21 außerhalb der Gummifeder 13 verbunden.

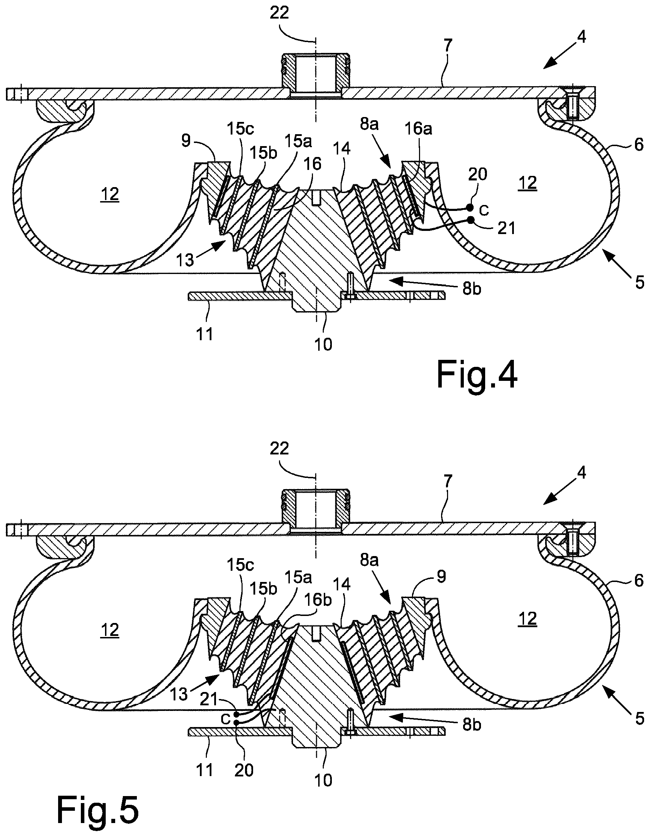

In Fig. 4 ist eine alternative Ausführungsform einer die Merkmale der Erfindung aufweisenden Gummifeder 13 dargestellt, welche sich von der bisher beschriebenen Bauform gemäß den Figuren 2 und 3 nur dadurch unterscheidet, dass der Traglastsensor 16a an der radialen Innenseite der ringförmigen, metallischen Felge 9 befestigt ist. Auch hierbei weist der Traglastsensor 16a ebenso wie die radiale Innenseite der Felge 9 die Geometrie einer Kegelmantelfläche auf. Die erste, radial äußere Elektrode 18 dieses Traglastsensors 16a ist zunächst über die Felge 9 und dann über eine erste elektrische Leitung mit einem ersten elektrischen Anschluss 20 außerhalb der Gummifeder 13 verbunden. Zudem ist die radial innen an diesem Traglastsensor 16a ausgebildete zweite Elektrode 19 des Traglastsensors 16a über eine zweite elektrische Leitung mit einem zweiten elektrischen Anschluss 21 außerhalb der Gummifeder 13 verbunden.

Die Fig. 5 zeigte eine weitere alternative Ausführungsform einer die Merkmale der Erfindung aufweisenden Gummifeder 13, welche sich von der Bauform gemäß den Figuren 2 und 3 nur dadurch unterscheidet, dass der Traglastsensor 16b an der radialen Außenseite des metallischen Innenkegels 10 der Gummifeder 13 befestigt ist. Auch hier weist der Traglastsensor 16b ebenso wie die radiale Außenseite des Innenkegels 10 die Geometrie einer Kegelmantelfläche auf. Zudem ist die radial innen an diesem Traglastsensor 16b ausgebildete erste Elektrode 19 des Traglastsensors 16a zunächst über den Innenkegel 10 und dann über eine erste elektrische Leitung mit einem ersten elektrischen Anschluss 20 außerhalb der Gummifeder 13 verbunden. Die zweite, radial äußere Elektrode 18 dieses Traglastsensors 16b ist über eine zweite elektrische Leitung mit einem zweiten elektrischen Anschluss 21 außerhalb der Gummifeder 13 verbunden.

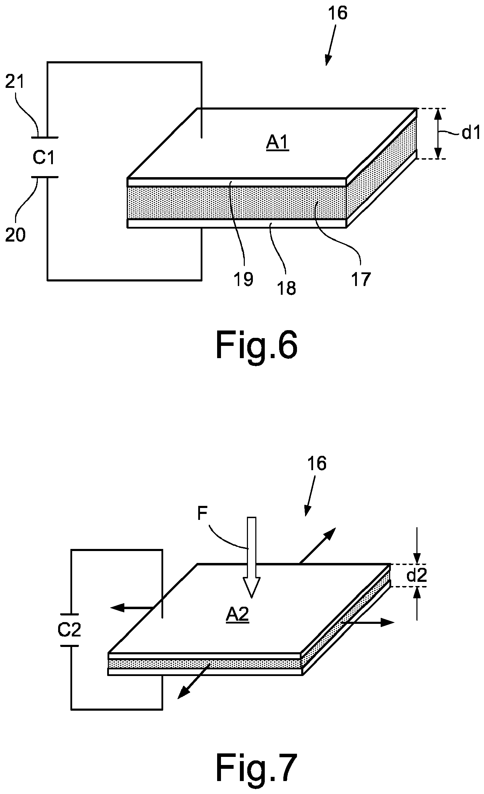

Fig. 6 zeigt den prinzipiellen Aufbau eines solchen Traglastsensors 16, 16a, 16b. Dieser Aufbau entspricht sehr weitgehend dem eines sehr dünnen elektrostatischen Plattenkondensators, der jedoch mechanisch nachgiebig, insbesondere extrem dehnbar ist. Solche Sensoren können als beidseitig beschichtete Folie hergestellt werden. Der Traglastsensor 16 gemäß Fig. 6 besteht demnach aus einer stark dehnbaren dünnen Elastomerfolie 17 als Dielektrikum, die beidseitig mit jeweils einer mit dem Dielektrikum mitdehnbaren Elektrode 18, 19 beschichtet ist. Der Traglastsensor 16 weist dabei eine Fläche mit dem Wert A1 und eine Dicke mit dem Wert d1 auf. Zwischen den beiden Elektroden 18, 19 ist eine elektrische Kapazität C1 elektrisch aufgebaut, welche an zwei Anschlüsse 20, 21 mittels einer geeigneten Vorrichtung messbar ist.

Bei einer in der Fig. 7 dargestellten Verformung der Elastomerfolie 17 durch eine senkrecht auf die Oberfläche der Elastomerfolie 17 einwirkende Kraft F verringert sich die Dicke des Traglastsensors 16 auf einen Wert d2 bei gleichzeitiger Vergrößerung der Fläche des Traglastsensors 16 auf einen Wert A2 und gleichzeitiger Vergrößerung der elektrischen Kapazität auf den Wert C2. Dabei gilt als Gleichung für die Dickenveränderung Δd = d1 - d2 und als Gleichung für die Flächenveränderung ΔA = A2 - A1. Hieraus resultiert eine elektrische Kapazitätserhöhung ΔC am Traglastsensor 16 gemäß der Gleichung ΔC = C2 - C1. Diese elektrische Kapazitätsveränderung dient als äquivalente Messgröße für die Kraft F, welche auf den Traglastsensor 16 gemäß Fig. 2 einwirkt.

Die Dicke d1 eines unbelasteten Traglastsensors 16, 16a, 16b beträgt typischerweise zwischen einigen Mikrometern bis einigen Zehntelmillimetern. Zur besseren Erkennbarkeit ist der in den Figuren 2 bis 5 gezeigte Traglastsensor 16, 16a, 16b daher stark überhöht dargestellt.

Da der Traglastsensor 16 gemäß den Figuren 2 und 3 eine auf der Seite des ersten Zwischenblechs 15a angeordnete erste Elektrode 18 aufweist, die mit diesem Zwischenblech 15a elektrisch leitend verbunden ist, und die gegenüberliegende zweite Elektrode 19 des Traglastsensors 16 direkt mit dem Gummikörper 14 verbunden ist, kann das erste Zwischenblech 15a auch als Sensorblech bezeichnet werden.

Es kann auch an mehreren Zwischenblechen 15a, 15b, 15c jeweils ein als Dielektrischer-Elastomer-Sensor ausgebildeter Traglastsensoren 16 angeordnet sein, deren Sensorsignale einzeln auswertbar sind. Diese mehreren Traglastsensoren 16 können aber auch elektrisch zusammengeschalt sein, so dass diese nur ein elektrisch kapazitives Sensorsignal erzeugen.

Die Funktionsweise wird wie folgt beschrieben:
Wird die in den Figuren dargestellte Schienenfahrzeugfederung 4 in ihrer Vertikalrichtung, also in Richtung ihrer Längsachse 22, mit einer Kraft beaufschlagt, so wirkt auf die Befestigungsplatte 7 und die Felge 9 eine entsprechende Kraft, in deren Folge das Arbeitsgas in der Luftfederkammer 12 komprimiert wird. Dies wiederum verursacht ein radiales Aufblähen des Luftfederbalgs 6, dem eine entsprechende Gegenkraft entgegenwirkt. Die Kraft, mit der die Schienenfahrzeugfederung 4 beaufschlagt wird, wirkt aufgrund der in Reihe gekoppelten Anordnung zwischen dem Luftfederbalg 6 und der Gummifeder 13 ebenso auf die Gummifeder 13 zwischen der Felge 9 und der Anschlussplatte 11 beziehungsweise dem Fahrwerk 3. Dadurch erfährt die Gummifeder 13 eine Verformung, die im Wesentlichen in einem entsprechenden Einfederungsweg in Vertikalrichtung resultiert. Dieser Einfederungsweg der Gummifeder 13 führt zu einer entsprechenden Kraft F, mit welcher der Traglastsensor 16 beaufschlagt wird (Fig. 7). Aufgrund seiner Elastizität wird der Traglastsensor 16 verformt, welches wie geschildert zu einer Änderung seiner elektrischen Kapazität C führt. Aus dieser Kapazitätsänderung ΔC kann auf die Traglast beziehungsweise eine Traglaständerung der Schienenfahrzeugfederung 4 geschlossen werden.

### Bezugszeichenliste

- 1: Fahrzeug, Schienenfahrzeug
- 2: Karosserie
- 3: Fahrwerk
- 4: Schienenfahrzeugfederung, Federsystem
- 5: Luftfeder
- 6: Luftfederbalg
- 7: Befestigungsplatte
- 8a: Oberer Teil der Gummifeder
- 8b: Unterer Teil der Gummifeder
- 9: Felge der Gummifeder
- 10: Innenkegel der Gummifeder
- 11: Anschlussplatte, Anschlussteil
- 12: Luftfederkammer
- 13: Gummifeder
- 14: Gummikörper der Gummifeder
- 15a: Erstes Zwischenblech
- 15b: Zweites Zwischenblech
- 15c: Drittes Zwischenblech
- 16: Traglastsensor, Dielektrischer-Elastomer-Sensor
- 16a: Traglastsensor, Dielektrischer-Elastomer-Sensor
- 16b: Traglastsensor, Dielektrischer-Elastomer-Sensor
- 17: Elastomerfolie, Dielektrikum
- 18: Erste Elektrode des Dielektrischen-Elastomer-Sensors
- 19: Zweite Elektrode des Dielektrischen-Elastomer-Sensors
- 20: Erster elektrischer Anschluss des Dielektrischen-Elastomer-Sensors
- 21: Zweiter elektrischer Anschluss des Dielektrischen-Elastomer-Sensors
- 22: Längsachse des Federsystems
- A1: Fläche des Dielektrischen-Elastomer-Sensors im Ausgangszustand
- A2: Fläche des Dielektrischen-Elastomer-Sensors mit einer Kraft beaufschlagt
- C: Kapazität des Dielektrischen-Elastomer-Sensors
- C1: Kapazität des Dielektrischen-Elastomer-Sensors im Ausgangszustand
- C2: Kapazität des Dielektrischen-Elastomer-Sensors mit einer Kraft beaufschlagt
- d1: Dicke des Dielektrischen-Elastomer-Sensors im Ausgangszustand
- d2: Dicke des Dielektrischen-Elastomer-Sensors mit einer Kraft beaufschlagt
- F: Kraft, mit welcher der Dielektrischen-Elastomer-Sensors beaufschlagt ist

## Patentansprüche

1. Gummifeder (13) mit einem integrierten Traglastsensor (16), welche als eine Zusatzfeder an einem Federsystem (4) eines Fahrzeugs (1) ausgebildet und angeordnet ist, **dadurch gekennzeichnet, dass** der Traglastsensor (16, 16a, 16b) als ein folienartiger Dielektrischer-Elastomer-Sensor ausgebildet ist.

2. Gummifeder nach Anspruch 1, **dadurch gekennzeichnet, dass** die Gummifeder (13) als Gummimetallfeder ausgebildet sowie als Zusatzfeder an einer Luftfeder (5) eines Federsystems (4) eines Schienenfahrzeugs (1) angeordnet ist, dass die Gummifeder (13) einen rotationssymmetrischen Gummikörper (14) aufweist, dass die Gummifeder (13) radial außen eine mit einem Luftfederbalg (6) der Luftfeder (5) verbindbare ringförmige metallische Felge (9) sowie radial innen einen metallischen Innenkegel (10) aufweist, und dass der Traglastsensor (16, 16a, 16b) radial zwischen der Felge (9) und dem Innenkegel (10) angeordnet sowie von dem Gummikörper (14) der Gummifeder (13) zumindest teilweise überdeckt ist.

3. Gummifeder nach Anspruch 1 oder 2, **dadurch gekennzeichnet, dass** in dem Gummikörper (14) der Gummifeder (13) mindestens ein dort eingebettetes Zwischenblech (15a) angeordnet ist, und dass der Traglastsensor (16) an dem mindestens einen Zwischenblech (15a) angeordnet ist.

4. Gummifeder nach einem der Ansprüche 1 bis 2, **dadurch gekennzeichnet, dass** die Gummifeder (13) mehrere Zwischenbleche (15a, 15b, 15c) aufweist, und dass an mehreren Zwischenblechen (15a, 15b, 15c) jeweils ein Traglastsensor (16) angeordnet ist.

5. Gummifeder nach Anspruch 3 oder 4, **dadurch gekennzeichnet, dass** das mindestens eine Zwischenblech (15a, 15b, 15c) und/oder der mindestens eine Traglastsensor (16, 16a, 16b) jeweils eine kegelmantelförmige Geometrie aufweist.

6. Gummifeder nach einem der Ansprüche 1 bis 5, **dadurch gekennzeichnet, dass** der Traglastsensor (16a) an der zum Gummikörper (14) weisenden radialen Innenseite der ringförmigen metallischen Felge (9) angeordnet ist.

7. Gummifeder nach einem der Ansprüche 1 bis 5, **dadurch gekennzeichnet, dass** der Traglastsensor (16b) an der radialen Außenseite des metallischen Innenkegels (10) der Gummifeder (13) angeordnet ist.

8. Federsystem (4), mit mindestens einer Gummifeder (13) mit einem integrierten Traglastsensor (16, 16a, 16b) zur Messung einer auf die Gummifeder (13) wirkenden Traglast, welche gemäß einem der Vorrichtungsansprüche ausgebildet ist.

9. Fahrzeug (1), wie Schienenfahrzeug, mit einem Federsystem (4), mit mindestens einer Gummifeder (13) mit einem integrierten Traglastsensor (16, 16a, 16b) zur Messung einer auf die Gummifeder (13) wirkenden Traglast, wobei die Gummifeder (13) gemäß einem der Vorrichtungsansprüche ausgebildet ist.

## Claims

1. Rubber spring (13) with an integrated payload sensor (16), which is designed and arranged as an additional spring on a spring system (4) of a vehicle (1), **characterized in that** the payload sensor (16, 16a, 16b) is designed as a film-like dielectric elastomer sensor.

2. Rubber spring according to Claim 1, **characterized in that** the rubber spring (13) is designed as a rubber-metal spring and is arranged as an additional spring on an air spring (5) of a spring system (4) of a rail vehicle (1), **in that** the rubber spring (13) has a rotationally symmetrical rubber body (14), **in that** the rubber spring (13) has radially on the outside an annular metallic rim (9), which can be connected to an air bellows (6) of the air spring (5), and radially on the inside a metallic inner cone (10), and **in that** the payload sensor (16, 16a, 16b) is arranged radially between the rim (9) and the inner cone (10) and is at least partially covered by the rubber body (14) of the rubber spring (13).

3. Rubber spring according to Claim 1 or 2, **characterized in that** in the rubber body (14) of the rubber spring (13) there is arranged at least one intermediate plate (15a) embedded there, and **in that** the payload sensor (16) is arranged on the at least one intermediate plate (15a).

4. Rubber spring according to either of Claims 1 and 2, **characterized in that** the rubber spring (13) has a number of intermediate plates (15a, 15b, 15c), and **in that** on a number of intermediate plates (15a, 15b, 15c) there is arranged a payload sensor (16) in each case.

5. Rubber spring according to Claim 3 or 4, **characterized in that** the at least one intermediate plate (15a, 15b, 15c) and/or the at least one payload sensor (16, 16a, 16b) has in each case a cone-shaped geometry.

6. Rubber spring according to one of Claims 1 to 5, **characterized in that** the payload sensor (16a) is arranged on the radial inner side of the annular metallic rim (9), facing the rubber body (14).

7. Rubber spring according to one of Claims 1 to 5, **characterized in that** the payload sensor (16b) is arranged on the radial outer side of the metallic inner cone (10) of the rubber spring (13).

8. Spring system (4), with at least one rubber spring (13) with an integrated payload sensor (16, 16a, 16b) for measuring a payload acting on the rubber spring (13), which is designed according to one of the device claims.

9. Vehicle (1), such as a rail vehicle, with a spring system (4), with at least one rubber spring (13) with an integrated payload sensor (16, 16a, 16b) for measuring a payload acting on the rubber spring (13), the rubber spring (13) being designed according to one of the device claims.

## Revendications

1. Ressort en caoutchouc (13) comprenant un capteur de charge intégré (16) qui est conçu et disposé comme un ressort supplémentaire au niveau d'un système de ressorts (4) d'un véhicule (1), **caractérisé en ce que** le capteur de charge (16, 16a, 16b) est conçu comme un capteur élastomère diélectrique de type feuille.

2. Ressort en caoutchouc selon la revendication 1, **caractérisé en ce que** le ressort en caoutchouc (13) est conçu comme un ressort en caoutchouc-métal et est disposé comme un ressort supplémentaire au niveau d'un ressort pneumatique (5) d'un système de ressorts (4) d'un véhicule ferroviaire (1), **en ce que** le ressort en caoutchouc (13) comporte un corps en caoutchouc (14) à symétrie de rotation, **en ce que** le ressort en caoutchouc (13) comporte radialement à l'extérieur une jante métallique annulaire (9) qui peut être reliée à un soufflet pneumatique (6) du ressort pneumatique (5) et radialement à l'intérieur un cône intérieur métallique (10), et **en ce que** le capteur de charge (16, 16a, 16b) est disposé radialement entre la jante (9) et le cône intérieur (10) et est au moins partiellement recouvert par le corps en caoutchouc (14) du ressort en caoutchouc (13).

3. Ressort en caoutchouc selon la revendication 1 ou 2, **caractérisé en ce qu'**au moins une tôle intermédiaire encastrée (15a) est disposée dans le corps en caoutchouc (14) du ressort en caoutchouc (13), et **en ce que** le capteur de charge (16) est disposé sur l'au moins une tôle intermédiaire (15a).

4. Ressort en caoutchouc selon l'une des revendications 1 à 2, **caractérisé en ce que** le ressort en caoutchouc (13) comporte une pluralité de tôles intermédiaires (15a, 15b, 15c) et **en ce qu'**un capteur de charge (16) est disposé sur chacune d'une pluralité de tôles intermédiaires (15a, 15b, 15c).

5. Ressort en caoutchouc selon la revendication 3 ou 4, **caractérisé en ce que** l'au moins une tôle intermédiaire (15a, 15b, 15c) et/ou l'au moins un capteur de charge (16, 16a, 16b) ont chacun une géométrie conique.

6. Ressort en caoutchouc selon l'une des revendications 1 à 5, **caractérisé en ce que** le capteur de charge (16a) est disposé sur le côté intérieur radial, dirigé vers le corps en caoutchouc (14), de la jante métallique annulaire (9).

7. Ressort en caoutchouc selon l'une des revendications 1 à 5, **caractérisé en ce que** le capteur de charge (16b) est disposé sur le côté extérieur radial du cône intérieur métallique (10) du ressort en caoutchouc (13).

8. Système de ressorts (4) comprenant au moins un ressort en caoutchouc (13) qui est pourvu d'un capteur de charge intégré (16, 16a, 16b) destiné à mesurer une charge agissant sur le ressort en caoutchouc (13) et qui est conçu selon l'une des revendications de dispositif.

9. Véhicule (1), tel qu'un véhicule ferroviaire, comportant un système de ressorts (4) qui comprend au moins un ressort en caoutchouc (13) pourvu d'un capteur de charge intégré (16, 16a, 16b) destiné à mesurer une charge agissant sur le ressort en caoutchouc (13), le ressort en caoutchouc (13) étant réalisé selon l'une des revendications de dispositif.
